# EUROPEAN PATENT SPECIFICATION

(11) **EP 2 645 913 B1**
(45) Date of publication and mention of the grant of the patent: **18.06.2014**
(21) Application number: 11793733.4
(22) Date of filing: 01.12.2011
(51) Int. Cl.: A47J 31/44, A47J 31/36, A47J 31/52

(54) **ERGONOMIC USER-INTERFACE FOR MOTORISED INGREDIENT CHAMBER**
ERGONOMISCHE BENUTZERSCHNITTSTELLE FÜR MOTORISIERTE MISCHUNGSBESTANDTEILSKAMMER
INTERFACE UTILISATEUR ERGONOMIQUE DESTINÉE À UNE CHAMBRE D'INGRÉDIENTS MOTORISÉE

(30) Priority: 01.12.2010 EP 10193238
(43) Date of publication of application: 09.10.2013
(73) Proprietor: Nestec S.A., 1800 Vevey (CH)
(72) Inventor: AGON, Fabien Ludovic, CH-1897 Le Bouveret (CH)
(74) Representative: Schnyder, Frank Simon
(86) International application number: PCT/EP2011/071556
(87) International publication number: WO 2012/072764

(56) References cited:
- EP-A1- 1 749 464
- EP-A1- 1 767 129

## Description

### Field of the Invention

The field of the invention pertains to beverage preparation machines, in particular using capsules of an ingredient of the beverage to be prepared, such as beverage preparation machines having a motorized ingredient chamber that can be opened and closed for inserting a beverage ingredient into the chamber and/or removal of a used ingredient therefrom.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved and/or ingredients that are stored and dosed automatically in the machine or else are added at the time of preparation of the drink.

Some beverage machines possess filling means that include a pump for liquid, usually water, which pumps the liquid from a source of water that is cold or indeed heated through heating means, such as a heating resistor, a thermoblock or the like.

For allowing the user to interact with such machines, for providing operation instructions to the machine or obtaining feed-back therefrom, various systems have been disclosed in the art, for instance as mentioned in the following references: AT 410 377, CH 682 798, DE 44 29 353, DE 10 2005 057 166, DE 20 2005 002 814, DE 20 2006 019 039, EP 1 448 084, EP 1 676 509, EP 1 707 088, EP 08 155 851.2, FR 2 624 844, FR 2 858 713, GB 2 240 206, GB 2 397 510, GB 2 240 206, US 4,253,385, US 4,377,049, US 4,458,735, US 4,554,419, US 4,767,632, US 4,954,697, US 5,312,020, US 5,335,705, US 5,372,061, US 5,375,508, US 5,645,230, US 5,731,981, US 5,836,236, US 5,927,553, US 5,959,869, US 6,182,555, US 6,354,341, US 6,759,072, US 7,028,603, US 7, 270, 050, US 7,279,660, US 7,350,455, US 2007/0157820, WO 97/25634, WO 99/50172, WO 03/037151, WO 03/039309, WO 2004/030435, WO 2004/030438, WO 2006/063645, WO 2006/082064, WO 2006/090183, WO 2007/003062, WO 2007/003990, WO 2008/104751, WO 2008/138710 and WO 2008/138820.

Especially in the field of coffee machines, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal the capsule upon use.

WO 2005/004683 and WO 2007/135136 relate to such brewing devices. The devices comprise a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule. During beverage preparation, the system is while configured to resist to a counter-force acting in reopening which forces is generated by the internal brewing pressure. The system further includes a handle for directly levering the knuckle joint mechanism. Such a device forms a simple assembly enabling insertion of the capsule by vertical fall through a passage in the frame and removal of the used capsule in the same direction as the insertion direction.

From a different approach, the actuation of the movable part of the brewing device may be motorized. Such a system is for example disclosed in EP 1 767 129. In this case, the user does not have to provide any manual effort to open or close the brewing device. A motor automatically opens and closes the device upon actuation of an appropriate switch, e.g. by a user.

Whereas the motorization of the brewing device relieves the user of providing the opening or closing effort of the brewing device, it is also linked with a loss of control by the user of the closure and opening process of the brewing device.

### Summary of the Invention

A preferred object of the invention is to provide a beverage machine that alleviates at least some of the abovementioned problems.

The invention relates to a machine for preparing and dispensing a beverage. For instance, the machine is a coffee, tea, chocolate, cacao, milk or soup preparation machine. In particular, the machine is arranged for preparing within a beverage processing module a beverage by passing hot or cold water or another liquid through a capsule containing an ingredient, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml, e.g. the volume for filling a cup or mug, depending on the type of beverage. Formed and dispensed beverages may be selected from ristrettos, espressos, lungos, cappuccinos, café latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

In particular, the beverage preparation machine has:
- an ingredient processing module that comprises a first part and a second part movable relative to the first part from a position for processing therein an ingredient for forming a beverage to a transfer position for inserting this ingredient into the processing module and/or for evacuation of the ingredient from the processing module;
- a motor means for relatively moving the first and second parts between the processing position and the transfer position, such as at least one electric, pneumatic and/or hydraulic actuator;
- a control unit for controlling the motor means to relatively move the first and second parts, such as an electric circuit including a controller or processor arranged to adjust a power supply to the motor means; and
- a user-interface connected to the control unit for sensing a user-request to relatively move the first and second parts via the controlled motor means.

Hence, these movable parts of the processing module are moved automatically by a motor means, e.g. as for instance taught in the abovementioned EP 1 767 129, and move at the request of a user operating appropriately the user-interface, e.g. by pushing a push-button.

In accordance with the invention, the user-interface is configured to detect a direction and extent of displacement of an object in a user-input area, this area being typically on or adjacent the user-interface and/or generally coextensive therewith. The detecting may require a contact between the object and the user-interface or may be contactless. The control unit is configured to control the motor means so as to relatively move the first and second parts towards the transfer position or towards the processing position according to the detected direction and extent of movement of the above object.

This object may be of a body part of a user, such as a finger or portion of a hand, or a tool held by a user, such as a stylus or pen or kitchen tool, e.g. a tea or coffee spoon.

Hence, the mechanical effort to drive together or apart these parts is not borne by a user but borne at least in part by a motor means of the machine. In particular, variations of the required force during opening and/or closure can be absorbed by such a motor means to increase the ergonomics of the machine. Moreover, to improve further the ergonomics of state of such a machine and provide an optimal feeling of control of the displacement of the movable parts between the transfer and processing positions, displacements of an object such as a user-hand or a part thereof, is detected by the user-interface and translated into a corresponding displacement of the movable parts. In particular, the progressive displacement of the relatively movable parts is aligned to the progressive displacement of the object spatially detected on the user-interface and preferably communicated, directly or indirectly via an appropriate feed-back means such as a series of LEDs or an interface screen or a mechanical indicator or a loudspeaker, to the user, in particular in a visible and/or audible manner. Hence, the effort required by a user is minimised while providing full control to the user over the movement of the movable part(s).

The user-interface typically includes a sensing arrangement for detecting the displacement of the object thereon, the sensing arrangement comprising at least one of a capacitive-based, light-based, ultrasonic-based, inductive-based, resistive-based and pressure-based sensor. For instance, a series of capacities, light emitters and receivers, and/or piezoelectric components may be used to sense a position in time, and thus the displacement, of an object in the user-input area.

The user-interface may be configured so as to detect a linear direction. Typically, the user-input area is arranged to extend along a straight line.

The user-interface can be configured so as to detect an arched direction. Normally, the user-input area is arranged to extend along an arched line.

It is also contemplated to configure the user-interface for detecting a linear and an arched direction, e.g. in particular when the relatively movable parts are arranged to move along linear and arched paths.

The first and second parts can be relatively movable by the motor means in a linear and/or arched direction.

In an embodiment, a relative motion of the first and second parts is user-visible from outside the machine, typically by a user operating the beverage machine. The user may directly see the movable first and/or second part and/or may perceive the motion via an indicator, e.g. a movable mechanical element or changing electric light or audible signal linked to the motion of the first and/or second part.

In an embodiment, the machine has an ingredient feed channel for supplying from outside said ingredient into the ingredient processing module. For instance, the ingredient is supplied within a capsule via the channel into the processing module. The feed channel may be associated with a gate member that is actuated by the motor means to open and close the feed channel when the first and second parts are moved into the transfer and processing positions, respectively. The gate member and the relatively movable first and second parts may be actuated by the same motor or by two or more coordinated motors. Opening and closing of the ingredient feed channel by the motorised gate member may be visible by a user from outside the beverage machine, e.g. while operating the machine to prepare a beverage.

The gate member can be arranged to be moved in a direction that is identical to a direction of motion of one of these first and second parts. Alternatively, the gate member may be arranged to be moved in a direction that is opposite to a direction of motion of one of these first and second parts.

Typically, the beverage preparation machine comprises a stationary structure, such as a housing and/or a frame. The structure may be arranged to rest on a support surface such as a table. The second part can be made movable by the motor relative to the first part and relative to the stationary structure. The first part may be stationary relative to the stationary structure or movable thereto.

The second part can be arranged to move in a direction, in particular an arched and/or linear direction, that is generally identical or opposite to the detected direction of the object moving on the user-interface.

Typically, the first and second parts in their processing position delimit a cavity for housing the beverage ingredient, such as tea or coffee or chocolate or powder milk. The ingredient processing module may include an upstream fluid circuit for delivering a carrier liquid, such as water, into the cavity and a downstream fluid circuit having a beverage outlet for delivering from the cavity the beverage formed by the carrier liquid flavoured by the beverage (flavouring) ingredient, the ingredient being in particular inserted into the cavity within a capsule.

The ingredient processing module can be configured to circulate automatically this carrier liquid into the cavity containing the ingredient when the first and second parts reach the processing position.

### Brief Description of the Drawings

The invention will now be described with reference to the schematic drawings, wherein:
- Figures 1 and 2 show part of a beverage machine having an ingredient processing module, a motor means, a control unit and a user-interface according to the invention; and
- Figures 1a and 2a illustrate the motorization of a movable part of the processing module shown in Figures 1 and 2.

### Detailed description

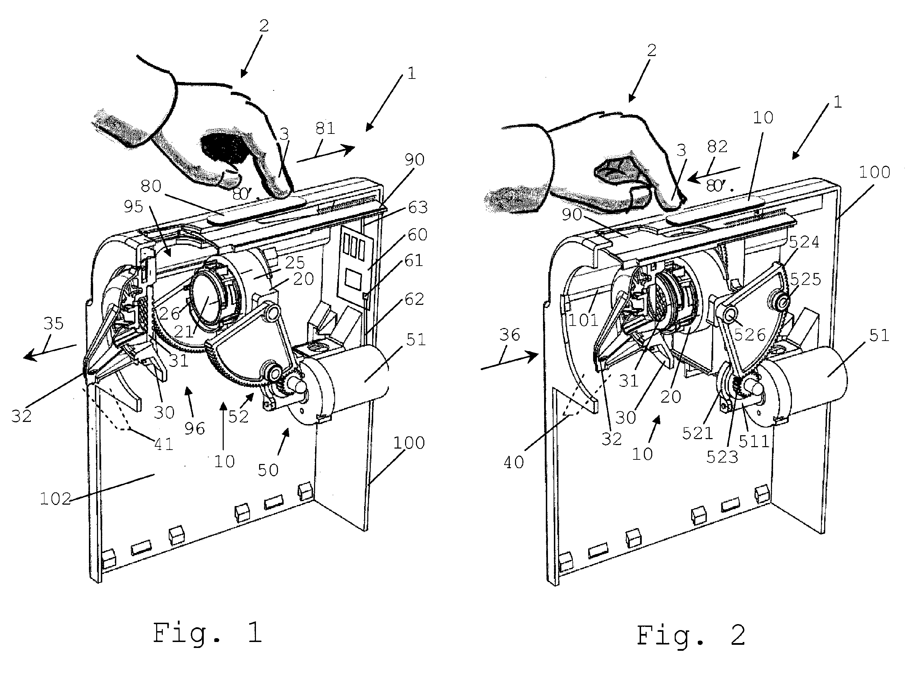

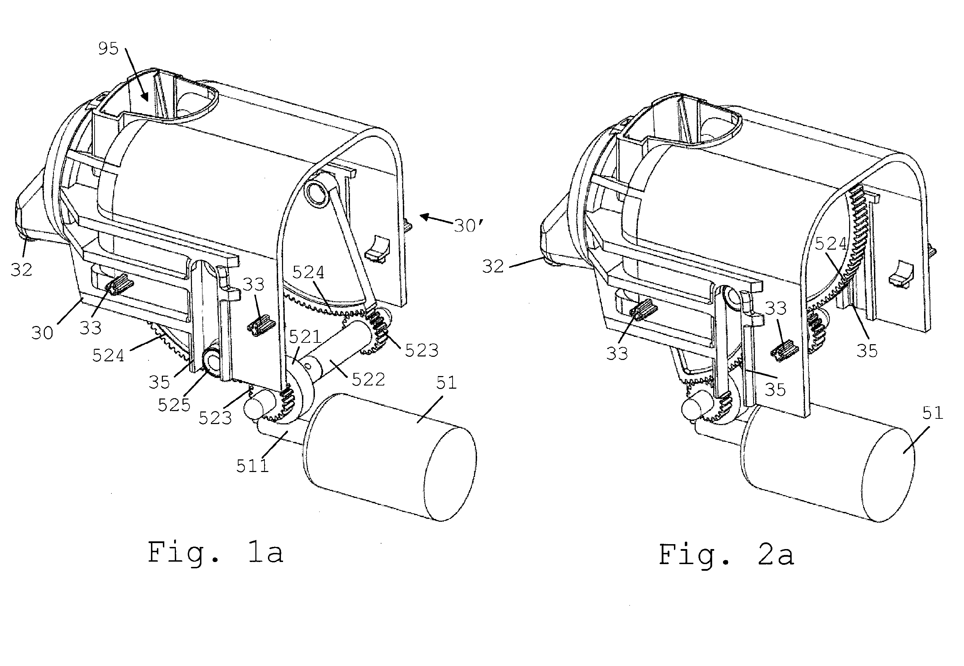

Figures 1 to 2a illustrate an exemplary embodiment of a beverage preparation machine 1 in accordance with the invention.

Machine 1 has an ingredient processing module 10 that comprises a first part 20 and a second part 30 movable relative to first part 20 from a position (Fig. 2) for processing therein an ingredient for forming a beverage to a transfer position (Fig. 1) for inserting such ingredient into processing module 10 and/or for evacuation thereof from the processing module. Such ingredient is typically a flavouring ingredient.

For example, first part 20 can be more or less fixed in a structure 100, e.g. frame or housing, of machine 1 and second part 30 may be driven to and away from first part 20 between the transfer and the processing positions.

In particular, second part 30 can be movable and has an opening 30' that may slide over first part 20. Lateral support elements 33 are provided for guiding second part 30 in slots 101 of structure 100.

First part 20 defines a chamber 21 and second part 30 has a member 31, e.g. generally shaped as a plate. Chamber 21 and member 31 are spaced apart in Fig. 1 for receiving and/or evacuating an ingredient therebetween. Chamber 21 and member 31 are brought together in Fig. 2 for delimiting an inner ingredient processing cavity for holding the ingredient, such as tea or coffee or chocolate or powder milk. The ingredient may be inserted pre-portioned within a capsule into this cavity.

Typically, first and second parts 20,30 in their processing position can be arranged for mixing liquid, such as an incoming flow of hot water, with a flavouring ingredient, e.g. coffee or tea, to form a flavoured beverage. The flavouring ingredient may in particular be supplied as a solid, e.g. ground coffee, tea leaves, powder milk, etc...

In a particular embodiment, first and second parts 20,30 form a brewing unit, e.g. of a tea or coffee machine. The flavouring ingredient may be supplied within a capsule into the brewing unit. The interaction between the brewing unit and the flavouring ingredient, when provided within a capsule, may be of the type disclosed in EP 1 859 714 or in EP 2 205 133.

Parts 20,30 in their processing position may be arranged for holding a pre-portioned flavouring ingredient supplied within a capsule while liquid is circulated therethrough to form a beverage. Such a flavouring capsule may have a cup-shaped body with a rim for fixing a lid thereon. The Body is configured for containing a pre-portioned amount of flavouring ingredient.

When closed capsules of flavouring ingredients are used, first and second parts 20,30 10 may include a capsule opener such as blades and/or a tearing tool, e.g. a plate with a tearing profile, for instance as known form Nespresso™ machines.

In particular, processing module 10 includes an upstream fluid arrangement, e.g. incorporating a liquid driver, such as a pump, and a thermal conditioner, such as a heater, for circulating thermally conditioned liquid, such as water, from a source, e.g. a liquid reservoir, into the ingredient processing cavity. Examples of upstream fluid arrangements are disclosed in WO 2009/074550 and in WO 2009/130099.

Moreover, processing module 10 comprises a downstream fluid arrangement with an outlet member 40 (in dotted lines in Fig. 2) for dispensing to an area for dispensing beverage to a user, e.g. an area for placing a user-cup or a user-mug, the beverage formed in the cavity containing the ingredient mixed with the circulating liquid. The dispensing area may be delimited at the bottom by a support surface for holding a user cup or mug. Such support surfaces are well known in the art, e.g. as disclosed in EP 1 867 260 and WO 2009/074557.

Outlet member 40 is in fluid communication with the ingredient processing cavity, downstream thereof, via liquid guide member 32. Guide member 32 can be fixed to movable part 30.

Machine 1 may have a collector receptacle (not shown) for collecting used ingredients, such as tea leaves or ground coffee, e.g. within used capsules, and waste liquid. The collector receptacle, e.g. waste collector, may be located in a lower part 102 of structure 100 of machine 1 and have an upper compartment for solids and a lower compartment for liquids. Collector receptacle may be insertable, e.g. slidable, into a cavity formed in the machine and removable therefrom for servicing, e.g. emptying the solids and/or liquids contained therein. For example, the storage capacity of the collector receptacle for accumulating used ingredient may be aligned to the storage capacity of reservoir for the supply of liquid such as water, e.g. as taught in PCT/EP10/056194.

Furthermore, processing module 10 can include a drop evacuation member 41 (in dotted lines in Fig. 1) for collecting residual drops in the downstream fluid arrangement when the machine is not expected to dispense a beverage; typically when processing module 10 is in the transfer position as illustrated in Fig. 1. Evacuation member 41 is configured to be in fluid configuration with liquid guide member 32 and arranged to evacuated liquid therefrom into a service unit located inside machine 1 generally underneath processing module 10. For example, the service unit is of the type of the above discussed collector receptacle.

The collector receptacle can be positioned underneath parts 20,30 to collect upon beverage preparation the used flavouring ingredient, e.g. ground coffee or tea, evacuated to the receptacle via an ingredient evacuation passage 96, e.g. by gravity. The receptacle typically has an anti-clogging arrangement, as for example taught in WO 2009/074559 and in WO 2009/135869, which are hereby incorporated by way of reference.

Ingredient processing module 10 can be configured to circulate automatically the liquid into the cavity containing the ingredient, optionally within a capsule, when first and second parts 20,30 reach the processing position. An automatic ingredient recognition system may be used to parameterize the processing of the ingredient.

Beverage machine 1 typically includes one or more of the following components:
a) Processing module 10, e.g. a fluid circuit including a brewing unit, delimiting in the processing position an inner flavouring chamber for receiving an ingredient of the beverage such as a flavouring ingredient, in particular a pre-portioned ingredient supplied within a capsule, and for guiding via an inlet an incoming flow of liquid for flavouring thereof, such as water, through this ingredient to a beverage outlet;
b) an in-line heater for heating this flow of liquid to be supplied to the ingredient;
c) a pump for pumping liquid through the in-line heater;
d) one or more fluid connecting members for guiding liquid from a source of liquid, such as tank of liquid;
e) an electric control unit, in particular comprising a printed circuit board (PCB), for receiving instructions from a user via an input user-interface and for controlling the in-line heater and the pump; and/or
f) one or more sensors for sensing at least one characteristic selected from characteristics of processing module 10, the in-line heater, the pump, liquid tank, an ingredient collector, a flow of the liquid (e.g. by a flowmeter), a pressure of the liquid and a temperature of the liquid, and for communicating such characteristic(s) to the control unit.

The heater may be a thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable fluid circuits of beverage preparation modules are for instance disclosed in WO 2009/074550 and WO 2009/130099, which are hereby incorporated by way of reference.

Furthermore, machine 1 includes a motor means 50 for relatively moving first and second parts 20,30 from the processing position (Fig. 2) to the transfer position Fig. 1) and/or vice versa. Motor means 50 comprises an electric motor 51 and a mechanical converter 52 for converting movements from motor 51 into relative movements between first and second parts 20,30.

Figs 1a and 2a illustrate motor 51 and converter 52 driving downstream part 30 from the transfer position (Fig. 1a) to the processing position (Fig. 2a).

In particular, mechanical converter 52 may include a gear, e.g. toothed gear, and/or cam arrangement. For instance, converter 52 includes a toothed wheel 521 that engages with a worm gear 511 formed on the rotating drive axis of motor 51. Toothed wheel 521 is fixed via rod 522 to a pair of transmission toothed wheels 523. Latter wheels 523 engage with corresponding toothed wheels 524, e.g. wheel sectors, that bear each a cam-follower 525 for cooperation with a cam 35 of movable second part 30 of processing module 10. Wheels 524 are pivotally mounted via a pivoting axis 526 on a frame or housing or another part of machine 1, such as onto part 20 of processing module 10. Likewise, rod 522 may be pivotally mounted on such a frame or housing 100 or another part of machine 10, e.g. part 20.

Furthermore, machine 1 has a control unit 60 (illustrated in Fig. 1) for controlling motor means 50 to relatively move first and second parts 20,30. Typically, control unit 60, e.g. a printed circuit board (PCB) with a controller or processor and memory device etc..., is electrically connected to an interface 61 for controlling the electric powering of motor 51 via an appropriate electric connection 62.

Machine 1 also includes a user-interface 80 connected to control unit 60, e.g. via an appropriate electric connection 63. User-interface 80 is arranged for sensing a user-request to relatively move first and second parts 20,30 by motor means 50 controlled by control unit 60.

In accordance with the invention, user-interface 80 is configured to detect a direction 81,82 and extent of displacement of an object 3 in a user-input area 80'. Object 3 may be a finger of a user's hand 2. Alternatively, the object may be a hand-held tool, such as a stylus or pen. Control unit 60 is configured to control motor means 50 so as to relatively move first and second parts 20,30 towards the transfer position or towards the processing position according to the detected direction and extent of displacement of object 3 in user-input area 80'.

Typically, motor means 50 are arranged to relatively move parts 20,30 in real time, namely without any delay noticeable by a user between the displacement of object 3 over area 80' and the relative movement between parts 20,30 of processing module 10.

Advantageously, motor means 50 are arranged to relatively move parts 20,30 to an extent between the transfer and processing positions proportional to the detected extent of displacement of object 3 across user-input area 80'. For example, when object 3 is displaced over 1/3 or 2/3 of area 80', parts 20,30 are moved together or apart over a distance corresponding to 1/3 or 2/3 of the distance of the movement parts 20,30 from the transfer position to the processing position. A safety arrangement such as a mechanical and/or electronically programmed abutment may be provided so that parts 20,30 are not moved beyond the transfer or the processing position.

To increase the intuitive user-control of the relative movements between parts 20,30, these movements and the displacement of object 3 may be parallel.

Hence, a user will intuitively associate the displacement of object 3 with the relative movement of parts 20,30.

Typically, user-interface 80 comprises a sensing arrangement for detecting displacement of object 3. For example, the sensing arrangement comprises at least one of a capacitive-based, light-based, ultrasonic-based, inductive-based, resistive-based and pressure-based sensor. Such arrangements are known, for instance, in connection with touch screens or touch pads or recognition systems.

User-interface 80 is typically configured so as to detect a linear direction 81,82. Alternatively, a user-interface can be configured to detect an arched direction, in particular when the relatively movable parts of processing the module exhibit an arched movement between the processing and the transfer positions, e.g. a movement of the type disclosed in EP 1 090 574.

In the particular example illustrated in the appended Figures, first and second parts 20,30 are relatively movable by motor means 50 in a linear direction, namely in a straight direction. Alternatively, the first and second parts can be relatively movable by the motor means in an arched direction, or in an arched and linear direction, e.g. sequentially arched and then linear and/or vice versa.

To improve the ergonomics of the machine, relative motion of first and second parts 20, 30 can be made user-visible from outside machine 1. User-visibility may be direct, i.e. a user can see from outside the machine relative motion of parts 20,30, or indirect, i.e a user can see from outside the machine an indicator representative of this relative motion. For instance, such a user-visible indicator can be formed by a gate member, such as a cover 90, for covering and uncovering a passage 95 for inserting an ingredient into processing module 10. Gate member 90 may be actuated by motor means 50, e.g. by motor 50 or a further motor preferably coordinated with motor 50. Hence, gate member 90 can be actuated by motor means 50 to open and close passage 95 when first and second parts 20,30 are moved into the transfer and processing positions, respectively. Passage 95 may have the shape of a capsule in cross-section containing the ingredient that is supplied into processing module 10, e.g. a capsule of the type disclosed in EP 1 839 543.

Gate member 90 can be arranged to be moved in a direction that is opposite to the direction of motion of movable part 30 of processing module 10. Alternatively, the two directions may be generally identical.

In particular, gate member 90 can be arranged to be moved in a direction that is identical to the detected direction 81,82 of object 3.

Typically, machine 1 has a stationary structure 100, such as a housing and/or a frame, the second part 30 being movable by motor means 50 relative to the first part and relative to the stationary structure. The first part may include a fixed structure 25, in particular including a hydraulic cylinder, and a secondary structure 26, such as a hydraulic piston member including an ingredient or capsule cage. Secondary structure 26 may be slightly movable relative to fixed structure 25, for example to adjust the closing distance between first and second relatively movable parts 20,30, e.g. to ensure proper handling of an ingredient/capsule inserted therebetween. Examples of such hydraulic positioning are for instance disclosed in EP 2 142 054.

Movable part 30 can be arranged to move in a direction 35,36 that is generally opposite to detected direction 81,82. Alternatively the directions may be generally identical.

## Claims

1. A machine (1) for preparing a beverage comprising:
- an ingredient processing module (10) that comprises a first part (20) and a second part (30) movable relative to the first part from a position for processing therein an ingredient for forming a beverage to a transfer position for inserting said ingredient into the processing module and/or for evacuation thereof from the processing module;
- a motor means (50) for relatively moving the first and second parts between the processing position and the transfer position;
- a control unit (60) for controlling the motor means to relatively move the first and second parts; and
- a user-interface (80) connected to the control unit for sensing a user-request to relatively move the first and second parts by the controlled motor means,
**characterised in that** the user-interface (80) is configured to detect a direction (81,82) and extent of displacement of an object (3) in a user-input area (80') and **in that** the control unit is configured to control the motor means so as to relatively move the first and second parts between the transfer and the processing positions into a direction (35,36) and to an extent depending on said detected direction (81,82) and extent of displacement of said object.

2. The machine of claim 1, wherein the user-interface (80) comprises a sensing arrangement for detecting said displacement, the sensing arrangement comprising at least one of a capacitive-based, light-based, ultrasonic-based, inductive-based, resistive-based and pressure-based sensor.

3. The machine of any preceding claim, wherein the user-interface (80) is configured so as to detect a linear direction (81,82).

4. The machine of any preceding claim, wherein the user-interface is configure so as to detect an arched direction.

5. The machine of any preceding claim, wherein the first and second parts (20,30) are relatively movable by the motor means (50) in a linear direction (35,36).

6. The machine of any preceding claim, wherein the first and second parts are relatively movable by the motor means in an arched direction.

7. The machine of any preceding claim, wherein a relative motion of the first and second parts (20,30) is user-visible from outside said machine (1).

8. The machine of any preceding claim, which comprises:
- an ingredient feed channel (95) for supplying from outside said ingredient into the ingredient processing module (10); and
- a gate member (90) that is actuated by said motor means (50) to open and close the feed channel when the first and second parts (20,30) are moved into the transfer and processing positions, respectively,
Optionally, opening and closing of the ingredient feed channel (95) by the motorised gate member (90) being user-visible from outside said machine (1).

9. The machine of claim 8, wherein the gate member is arranged to be moved in a direction that is identical to a direction of motion of one of said first and second parts.

10. The machine of claim 8, wherein the gate member (90) is arranged to be moved in a direction that is opposite to a direction (35,36) of motion of one of said first and second parts (20,30).

11. The machine of any preceding claim, which comprises a stationary structure (100), such as a housing and/or a frame, the second part (30) being movable by the motor means (50) relative to the first part (20) and relative to the stationary structure.

12. The machine of claim 11, wherein the second part is arranged to move in a direction, in particular an arched and/or linear direction, that is generally identical to said detected direction.

13. The machine of claim 11, wherein the second part (30) is arranged to move in a direction (35,36), in particular an arched and/or linear direction, that is generally opposite to said detected direction.

14. The machine of any preceding claim, wherein the first and second parts (20,30) in the processing position delimit a cavity (21,31) for housing said ingredient, such as tea or coffee or chocolate or powder milk, and wherein the ingredient processing module (10) comprises an upstream fluid circuit for delivering a carrier liquid, such as water, into the cavity and a downstream fluid circuit having a beverage outlet (40) for delivering from the cavity said beverage formed by said carrier liquid flavoured by said ingredient, said ingredient being in particular inserted into the cavity within a capsule.

15. The machine of claim 14, wherein the ingredient processing module (10) is configured to circulate automatically said carrier liquid into the cavity containing said ingredient when the first and second parts (20,30) reach the processing position.

## Patentansprüche

1. Apparat (1) zur Herstellung eines Getränks, aufweisend:
- ein Zutatenverarbeitungsmodul (10), welches eine erste Baugruppe (20) und eine zweite Baugruppe (30) aufweist, welche relativ zur ersten Baugruppe beweglich ist von einer Stellung, um in dieser eine Zutat in ein Getränk zu verarbeiten, in eine Transferstellung, um diese Zutat in das Verarbeitungsmodul einzuführen und/oder zur Entfernung jener aus dem Verarbeitungsmodul;
- Antriebsmittel (50) für die Relativbewegung der ersten und zweiten Baugruppe zwischen der Verarbeitungsstellungen und der Transferstellung;
- eine Steuereinheit (60) zur Steuerung der Antriebsmittel zur Relativbewegung der ersten und zweiten Baugruppe; und
- ein Benutzer-Interface (80), das mit der Steuerungseinheit verbunden ist, zum Auslesen einer Nutzeranfrage zur Relativbewegung der ersten und zweiten Baugruppe durch die angesteuerten Antriebsmittel;
**dadurch gekennzeichnet,**
**dass** das Benutzer-Interface darauf abgestimmt ist, die Richtung (81, 82) und das Ausmaß einer Ortsveränderung eines Objekts (3) in einem dem Benutzer zugänglichen Einführungsbereich (80') zu erfassen, und dass die Steuereinheit darauf abgestimmt ist, die Antriebsmittel so anzusteuern, dass die erste Baugruppe relativ zur zweiten Baugruppe zwischen der Transfer- und der Verarbeitungsstellung in Abhängigkeit von oben genannter erfasster Richtung (81,82) und dem Ausmaß der Ortsveränderung dieses Objekts in die Richtung (35,36) und mit dem Ausmass verschoben wird.

2. Apparat nach Anspruch 1, wobei das Benutzer-Interface (80) eine Erfassungsanordnung zur Erfassung dieser Ortsveränderung aufweist, wobei die Erfassungsanordnung zumindest einen von kapazitätsbasiertem, lichtbasiertem, ultraschallbasiertem, induktionsbasiertem, widerstandsbasiertem und druckbasiertem Sensor aufweist.

3. Apparat nach einem der vorangegangenen Ansprüche, wobei das Benutzer-Interface darauf abgestimmt ist, eine lineare Richtung (81, 82) zu erfassen.

4. Apparat nach einem der vorangegangenen Ansprüche, wobei das Benutzer-Interface darauf abgestimmt ist, eine bogenförmige Richtung (81, 82) zu erfassen.

5. Apparat nach einem der vorangegangenen Ansprüche, wobei die erste und zweite Baugruppe (20, 30) relativ durch die Antriebsmittel (50) in linearer Richtung (35, 36) beweglich sind.

6. Apparat nach einem der vorangegangenen Ansprüche, wobei die erste und zweite Baugruppe (20, 30) relativ durch die Antriebsmittel (50) in einer bogenförmigen Richtung beweglich sind.

7. Apparat nach einem der vorangegangenen Ansprüche, wobei die Relativbewegung der ersten und zweiten Baugruppe (20, 30) durch den Benutzer von außen sichtbar ist.

8. Apparat nach einem der vorangegangenen Ansprüche, aufweisend:
- einen Zutatenzuführungskanal (95) zur Zuführung dieser Zutat in das Zutatenverarbeitungsmoduls (10); und
- ein Verschlusselement (90), welches durch die Antriebsmittel (50) angesteuert ist zum Öffnen und Schließen des Zuführungskanals, wenn die erste und zweite Baugruppe (20, 30) in die entsprechende Transfer- oder Verarbeitungsstellung bewegt werden,
wobei optional das Öffnen und Schließen des Zutatenzuführungskanals (95) durch das angetriebene Verschlusselement (90) für den Benutzer von außerhalb dieser Maschine (1) sichtbar sein kann.

9. Apparat nach Anspruch 8, wobei das Verschlusselement (90) so angeordnet ist, dass es in eine Richtung bewegt werden kann, welche identisch zu der Bewegungsrichtung von einer, dieser ersten oder zweiten Baugruppe (20, 30) ist.

10. Apparat nach Anspruch 8, wobei das Verschlusselement (90) so angeordnet ist, dass es in eine Richtung bewegt werden kann, welche gegenteilig zu der Bewegungsrichtung von einer, dieser ersten oder zweiten Baugruppe (20, 30) ist.

11. Apparat nach einem der vorangegangenen Ansprüche, welcher eine stationäre Struktur (100) aufweist, wie etwa ein Gehäuse und/oder einen Rahmen, wobei die zweite Baugruppe (30) relativ zur ersten Baugruppe (20) durch ein Antriebsmittel (50) und relativ zu der stationären Struktur bewegbar ist.

12. Apparat nach Anspruch 11, wobei die zweite Baugruppe so angeordnet ist, dass sie sich in eine Richtung bewegt, im speziellen eine bogenförmige und/oder lineare Bewegungsrichtung, welche generell identisch mit dieser Bewegungsrichtung ist.

13. Apparat nach Anspruch 11, wobei die zweite Baugruppe so angeordnet ist, dass sie sich in eine Richtung (35, 36) bewegt, im speziellen eine bogenförmige und/oder lineare Bewegungsrichtung, welche generell entgegengesetzt zu dieser Bewegungsrichtung ist.

14. Apparat nach einem der vorangegangenen Ansprüche, wobei die erste und zweite Baugruppe (20, 30) in der Verarbeitungsposition einen Aufnahmeraum (21, 31) zur Aufnahme dieser Zutat, wie Tee oder Kaffee oder Schokolade oder Milchpulver bilden und wobei das Zutatenverarbeitungsmodul (10) einen vorgeschalteten Flüssigkeitskreislauf, zur Zuführung einer Trägerflüssigkeit, wie Wasser in den Aufnahmeraum aufweist und einen nachgeschalteten Flüssigkeitskreislauf mit einem Getränkeauslass (40) zur Bereitstellung dieses Getränks aus der Öffnung, erstellt durch diese Trägerflüssigkeit und dieser aromatisierende Zutat, wobei diese Zutat im besonderen innerhalb einer Kapsel in die Aufnahmeraum eingelegt wird.

15. Apparat nach Anspruch 14, wobei das Zutatenverarbeitungsmodul (10) so abgestimmt ist, diese Trägerflüssigkeit automatisch in den, diese Zutat beinhaltenden Aufnahmeraum zirkulieren zu lassen, wenn die erste und zweite Baugruppe (20, 30) die Verarbeitungsstellung erreicht haben.

## Revendications

1. Machine (1) destinée à préparer une boisson comprenant :
- un module de traitement d'ingrédient (10) qui comprend une première partie (20) et une deuxième partie (30) mobile par rapport à la première partie depuis une position destinée à traiter dans celle-ci un ingrédient pour former une boisson jusqu'à une position de transfert destinée à insérer ledit ingrédient dans le module de traitement et/ou destinée à l'évacuer du module de traitement ;
- un moyen formant moteur (50) destiné à déplacer de manière relative les première et deuxième parties entre la position de traitement et la position de transfert ;
- une unité de commande (60) destinée à commander le moyen formant moteur pour déplacer de manière relative les première et deuxième parties ; et
- une interface utilisateur (80) reliée à l'unité de commande pour détecter une demande d'utilisateur pour déplacer de manière relative les première et deuxième parties par le moyen, commandé, formant moteur,
**caractérisée en ce que** l'interface utilisateur (80) est configurée de manière à détecter une direction (81, 82) et une amplitude de déplacement d'un objet (3) dans une zone d'entrée d'utilisateur (80') et **en ce que** l'unité de commande est configurée pour commander le moyen formant moteur de manière à déplacer de manière relative les première et deuxième parties entre les positions de transfert et de traitement dans une direction (35, 36) et selon une amplitude dépendant desdites direction (81, 82) et amplitude de déplacement détectées dudit objet.

2. Machine selon la revendication 1, dans laquelle l'interface utilisateur (80) comprend un agencement de détection destiné à détecter ledit déplacement, l'agencement de détection comprenant au moins élément parmi un capteur basé sur une capacité, basé sur la lumière, basé sur des ultrasons, basé sur une induction, basé sur une résistance et basé sur la pression.

3. Machine selon l'une quelconque des revendications précédentes, dans laquelle l'interface utilisateur (80) est configurée de manière à détecter une direction linéaire (81, 82).

4. Machine selon l'une quelconque des revendications précédentes, dans laquelle l'interface utilisateur est configurée de manière à détecter une direction arquée.

5. Machine selon l'une quelconque des revendications précédentes, dans laquelle les première et deuxième parties (20, 30) sont déplaçables de manière relative par le moyen formant moteur (50) dans une direction linéaire (35, 36).

6. Machine selon l'une quelconque des revendications précédentes, dans laquelle les première et deuxième parties sont déplaçables de manière relative par le moyen formant moteur dans une direction arquée.

7. Machine selon l'une quelconque des revendications précédentes, dans laquelle un mouvement relatif des première et deuxième parties (20, 30) est visible par l'utilisateur depuis l'extérieur de ladite machine (1).

8. Machine selon l'une quelconque des revendications précédentes, qui comprend :
- un canal d'approvisionnement d'ingrédient (95) destiné à fournir depuis l'extérieur ledit ingrédient dans le module de traitement d'ingrédient (10) ; et
- un organe formant porte (90) qui est actionné par ledit moyen formant moteur (50) pour ouvrir et fermer le canal d'approvisionnement lorsque les première et deuxième parties (20, 30) sont déplacées dans les positions de transfert et de traitement, respectivement, facultativement, l'ouverture et la fermeture du canal d'approvisionnement d'ingrédient (95) par l'organe motorisé formant porte (90) étant visible par l'utilisateur depuis l'extérieur de ladite machine (1).

9. Machine selon la revendication 8, dans laquelle l'organe formant porte est agencé pour être déplacé dans une direction qui est identique à une direction de mouvement de l'une desdites première et deuxième parties.

10. Machine selon la revendication 8, dans laquelle l'organe formant porte (90) est agencé pour être déplacé dans une direction qui est opposée à une direction (35, 36) de mouvement de l'une desdites première et deuxième parties (20, 30).

11. Machine selon l'une quelconque des revendications précédentes, qui comprend une structure fixe (100), comme par exemple un boîtier et/ou un cadre, la deuxième partie (30) étant déplaçable par le moyen formant moteur (50) par rapport à la première partie (20) et par rapport à la structure fixe.

12. Machine selon la revendication 11, dans laquelle la deuxième partie est agencée pour se déplacer dans une direction, en particulier une direction arquée et/ou linéaire, qui est généralement identique à ladite direction détectée.

13. Machine selon la revendication 11, dans laquelle la deuxième partie (30) est agencée pour se déplacer dans une direction (35, 36), en particulier une direction arquée et/ou linéaire, qui est généralement opposée à ladite direction détectée.

14. Machine selon l'une quelconque des revendications précédentes, dans laquelle les première et deuxième parties (20, 30) dans la position de traitement délimitent une cavité (21, 31) destinée à recevoir ledit ingrédient, comme par exemple du thé ou du café ou du chocolat ou du lait en poudre, et dans laquelle le module de traitement d'ingrédient (10) comprend un circuit de fluide amont destiné à délivrer un liquide porteur, comme par exemple de l'eau, dans la cavité et un circuit de fluide aval ayant une sortie de boisson (40) destinée à délivrer depuis la cavité ladite boisson formée par ledit liquide porteur aromatisé par ledit ingrédient, ledit ingrédient étant en particulier inséré dans la cavité à l'intérieur d'une capsule.

15. Machine selon la revendication 14, dans laquelle le module de traitement d'ingrédient (10) est configuré pour faire circuler automatiquement ledit liquide porteur dans la cavité contenant ledit ingrédient lorsque les première et deuxième parties (20, 30) atteignent la position de traitement.
